# EUROPEAN PATENT APPLICATION

(11) **EP 0 978 366 A2**
(43) Date of publication of application: **09.02.2000**
(21) Application number: 99116125.8
(22) Date of filing: 17.11.1995
(51) Int. Cl.: B29C 47/04, B29C 47/06

(54) **Apparatus for producing composite sheet**

(30) Priority: 17.11.1994 JP 28337694
(62) Divisional of application: 95938036.1
(71) Applicant: Mitsubishi Rayon Co., Ltd., Tokyo 108-8506 (JP)
(72) Inventor: Narisada, Takehiko, Central Research Laboratories, Otake-shi, Hiroshima 739-06 (JP); Hiromoto, Yasuo, Central Research Laboratories, Otake-shi, Hiroshima 739-06 (JP); Edamatsu, Michisuke, Central Research Laboratories, Otake-shi, Hiroshima 739-06 (JP); Kawai, Osamu, Central Research Laboratories, Otake-shi, Hiroshima 739-06 (JP); Yamada, Hideo, Central Research Laboratories, Otake-shi, Hiroshima 739-06 (JP)
(74) Representative: Jones, Helen Marjorie Meredith

(57) **Abstract**

Apparatus for producing a composite sheet comprises a resin flow passage (71) or a resin a, and a plurality of flat flow passages (51) forming a plurality of flat resin strips B formed of the resin b, the plurality of flat flow passages being provided in a middle portion of resin flow passage (71), the flow passages (51) having outlets (52) provided in a direction towards to outlet (73) of composite resin (a+b) flow. The apparatus ensures both resins flow in the same direction in the portion where the resins meet (at the outlets 52). Resins of differing viscosities may be co-extruded to form a composite sheet having good control over the sectional form of resin strips b. Preferably resin b is coloured whilst resin a is transparent. The product sheet may be useful as light cut-off sheets and visibility-controlling sheets.

## Description

### Technical Field

The present invention relates to a composite resin sheet comprising a resin layer in a sheet form and resin strips buried in a stripe form in the resin layer, and a process and apparatus for producing the same.

The present invention particularly relates to various composite resin sheets, having colored resin strips, which are applicable to a variety of applications, such as design sheets, wherein importance is given mainly to the appearance, and light cut-off sheets and visibility-controlling sheets adapted to cut off light in a given direction or control the visibility, and a process and apparatus for producing the same.

### Background Art

A light cut-off sheet or a light control film produced by coextruding a transparent thermoplastic resin and an opaque thermoplastic resin to alternately laminate a number of transparent regions and a number of an opaque regions on top of the other are known in the art (Japanese Unexamined Patent Publication (Kokai) Nos. 58-22135, 61-125846, and 2-18503).

In the formation of the composite resin sheet by the conventional coextrusion process, previously molded products having a predetermined shape are laminated. Further, in these sheets, the transparent resin and the opaque resin are laminated in the widthwise direction of the sheets, and the thicknesswise direction of the laminate is the same as the widthwise direction of the composite sheet. Up to now, any composite sheet comprising a resin substrate sheet and a plurality of resin strips buried in the resin substrate sheet has not been known in the art.

### Disclosure of Invention

Under these technical circumstances, the present invention has been made, and an object of the present invention is to provide a composite resin sheet excellent in transparency, durability and other properties of the resin layer in a sheet form and possessing various functions, such as design feature, light cut-off property and visibility controllability, and excellent appearance, and an apparatus and process which enable the above sheet to be very simply produced by extrusion of a thermoplastic resin.

According to one aspect of the present invention, there is provided a composite sheet comprising a substrate resin sheet A and a plurality of flat resin strips B provided in the substrate resin sheet A.

According to another aspect of the present invention, there is provided an apparatus for producing the above composite sheet, comprising:
a composite resin flow passage (21) having a predetermined width in the X direction, a predetermined thickness in the Y direction, and a predetermined length in the Z direction and including a composite resin flow forming section (22) provided in one end of the Z direction and an outlet (23), for the composite resin flow, provided on the other end of the Z direction;
a plurality of flow passages (31) for passing a resin b for the resin strips B in the Z direction in the composite resin flow forming section (22); and
two rows of flow passages (41, 42) for passing a resin a for a substrate resin sheet A into the composite resin flow forming section (22) from both sides of the XZ plane,
the plurality of flow passages (31), for the resin b being provided at predetermined intervals in the X direction,
the flow passages (41, 42), for the resin a, each in its XZ section being of such a form that sections Rn and Ln having a large height in the Z direction and sections Rm and Lm having a small height (including zero) in the Z direction are alternately arranged. This apparatus will be referred to as the "apparatus according to the first embodiment of the present invention."

According to still another aspect of the present invention, there is provided a process for producing a composite sheet, comprising the steps of: providing the above apparatus; passing a resin b for resin strips B through a plurality of flow passages (31) into a composite resin flow forming section (22) while passing a resin a for a substrate resin sheet A through two rows of a plurality of flow passages (41, 42) into the composite resin flow forming section (22) to permit the resin strips B to be deformed by the action created by the flow of the resin a into a flat form in section; and taking up a composite sheet delivered through an outlet (23) for the composite resin flow.

According to a further aspect of the present invention, there is provided another apparatus for producing the above sheet. This apparatus comprises:
a resin flow passage (71) having a predetermined width in the X direction, a predetermined thickness in the Y direction, and a predetermined length in the Z direction and including an outlet (61), for a resin a for a substrate resin sheet A, provided on one end of the Z direction and an outlet (73), for a composite resin flow, provided on the other end of the Z direction;
a plurality of flat flow passages (51) for forming a plurality of flat resin strips B formed of a resin b, the plurality of flat flow passages (51) being provided, in a middle portion of the resin flow passage (71) between the outlet (61) for the resin a and the outlet (73) for the composite resin flow, at predetermined intervals in the X direction and at a given angle γ(0° ≤ γ ≤ 90°) to the YZ plane,
the flow passages (51), for the resin b, having an outlet (52) provided in a direction toward the outlet (73) for the composite resin flow. This apparatus will be referred to as the "apparatus according to the second embodiment of the present invention."

According to a still further aspect of the present invention, there is provided a process for producing a composite sheet, comprising the steps of: providing the apparatus according to the second embodiment of the present invention; passing a resin a for a substrate resin sheet A and a resin b for resin strips B respectively through an outlet (61) for the resin a and an outlet (52) of the flow passage (51) for the resin b into a resin flow passage (71); and then taking up a composite sheet delivered through an outlet (73) for a composite resin flow.

### Brief Description of the Drawings

Fig. 1 is a schematic plan view showing one embodiment of the apparatus according to the first aspect of the present invention;
Fig. 2 is a schematic side view of the apparatus shown in Fig. 1;
Fig. 3 is a schematic plan cross-sectional view diagramaticaly showing an embodiment of the internal structure of the apparatus shown in Fig. 1;
Fig. 4 is a cross-sectional view taken on line I-I of Fig. 3;
Fig. 5 is a perspective view as viewed from line II-II of Fig. 4;
Fig. 6 is an explanatory, schematic cross-sectional view of an embodiment of the resin flow passage in the apparatus shown in Fig. 1;
Fig. 7 is a cross-sectional view taken on line IV-IV of Fig. 6;
Fig. 8 is a schematic cross-section view showing the form of a resin strip formed within the composite resin flow passage shown in Fig. 6;
Fig. 9 is an explanatory, schematic cross-sectional view of another embodiment of the resin flow passage in the apparatus shown in Fig. 1;
Fig. 10 is a cross-sectional view taken on line V-V of Fig. 9;
Fig. 11 is a schematic cross-sectional view showing the form of a resin strip formed within a composite resin flow passage shown in Fig. 9;
Fig. 12 is an explanatory, schematic cross-sectional view of a still another embodiment of the resin flow passage in the apparatus shown in Fig. 1;
Fig. 13 is a cross-sectional view taken on line VI-VI of Fig. 12;
Fig. 14 is a schematic cross-sectional view showing the form of a resin strip formed within the composite resin flow passage shown in Fig. 12;
Figs. 15a to 15e are schematic cross-sectional views showing embodiments of the composite resin sheet prepared according to the present invention;
Fig. 16 is an explanatory, schematic cross-sectional view of a further embodiment of the resin flow passage in the apparatus shown in Fig. 1;
Fig. 17 is a schematic cross-sectional view of a still further embodiment of the resin flow passage in the apparatus shown in Fig. 1;
Figs. 18a to 18f are schematic cross-sectional views showing another embodiment of the resin flow passage as shown in Fig. 7;
Fig. 19 is a schematic plan view diagramaticaly showing another embodiment of the internal structure of the apparatus shown in Fig. 1;
Fig. 20 is a cross-sectional view taken on line VII-VII of Fig. 19;
Fig. 21a is a cross-sectional view taken on line VIII-VIII of Fig. 20, and Fig. 21 b is an enlarged view of the outlet of the resin flow passage shown in Fig. 21a;
Fig. 22 is a schematic cross-sectional view showing a modified embodiment of the apparatus shown in Fig. 20;
Fig. 23 is a schematic view showing a modified embodiment of the composite resin flow forming section in the apparatus shown in Fig. 19;
Fig. 24 is a cross-sectional view taken on line IX-IX of Fig. 23;
Fig. 25 is a schematic view showing a modified embodiment of the apparatus shown in Fig. 23;
Fig. 26 is a cross-sectional view showing the composite resin flow forming section in one embodiment of an apparatus to be compared with the apparatus of the present invention; and
Fig. 27 is a cross-sectional view showing the composite resin flow forming section in another embodiment of an apparatus to be compared with the apparatus of the present invention.

### Best Mode for Carrying Out the Invention

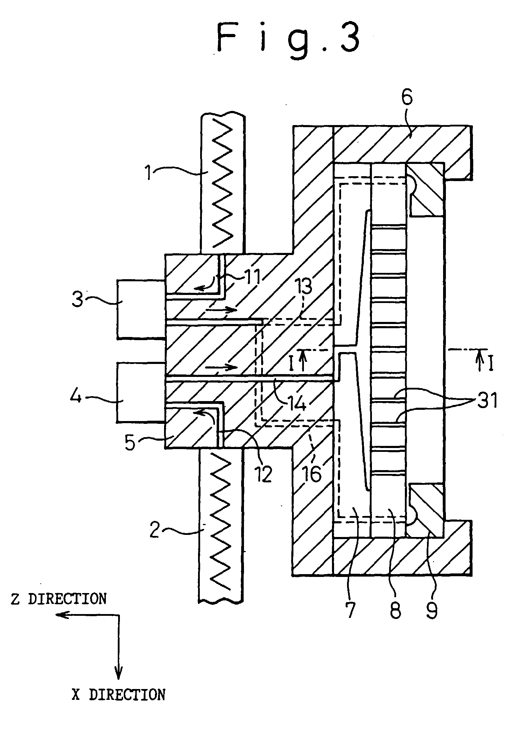

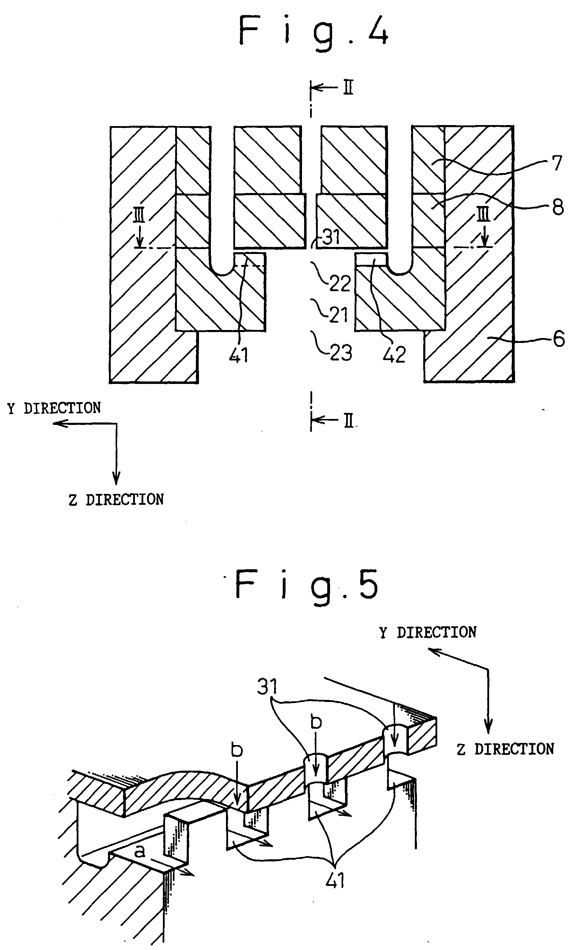

In the apparatus according to the first embodiment of the present invention, the X direction corresponds to the widthwise direction of a composite sheet, the Y direction corresponds to the thicknesswise direction of the composite sheet, and the Z direction corresponds to the direction of advance of the composite sheet. Specifically, the Z direction may be a perpendicular direction in Fig. 4 and a horizontal direction in Fig. 3.

Special features of the apparatus according to the first embodiment of the present invention reside in the form and arrangement of two rows of flow passages 41, 42 for passing a resin a for a substrate resin sheet A in a composite resin flow forming section 22. Specifically, the form of the flow passages 41, 42 in XZ section is characterized in that sections Rn and Ln having a large height in the Z direction and sections Rm and Lm having a small height (including zero) in the Z direction are alternately arranged. Further, this apparatus is characterized in that the position of sections Rm, Rn, Lm, and Ln are varied relative to the flow passage 31 for a resin b for resin strips B.

The section of the plurality of flow passages 31 for the resin b is most typically circular. However, it may be quadrangular, triangular, or hexagonal or may be of various other forms.

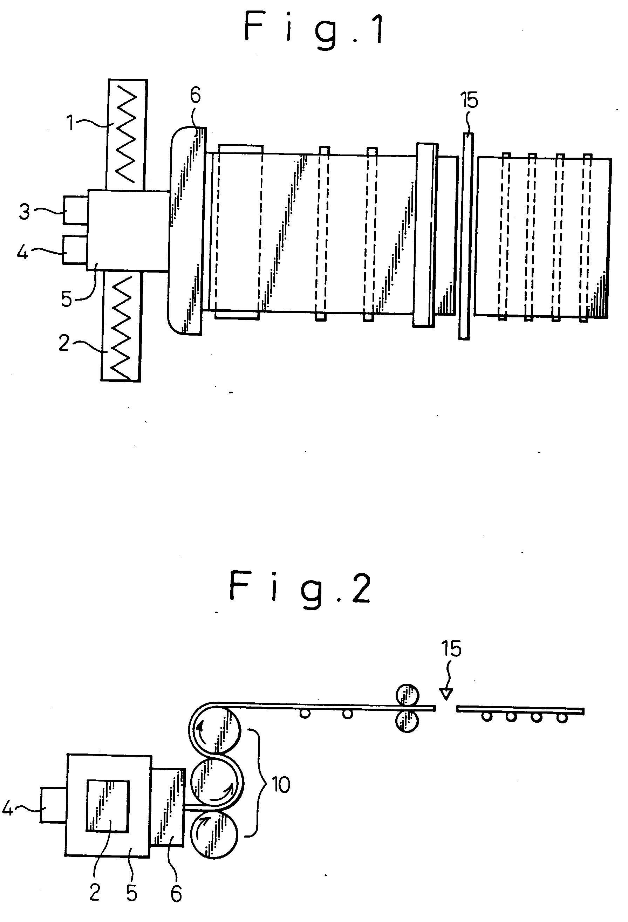

A resin a for forming a resin layer A in a sheet form is melt-extruded by means of a first extruder 1 into a molding head and fed through a first flow passage into a first constant rate pump 3. On the other hand, a resin b for forming resin strips B is melt-extruded by means of a second extruder 2 into the molding head and fed through a second flow passage into a second constant rate pump 4 (Fig. 1). The resin a is distributed by means of a distribution nozzle 7 provided in a die pack 6, and the resin b is distributed by means of a distribution nozzle 8 provided in the die pack 6 to a plurality of flow passages 31 (Fig. 3). A resin b is delivered through a plurality of flow passages 31 provided in an identical XZ plane into a composite resin flow forming section 22 to form a flow of a plurality of resin strips having predetermined form, dimensions, arrangement and the like. The plurality of resin strips of the resin b delivered through the plurality of passages into the composite flow forming section 22 are sandwiched from both sides thereof and buried in the resin a to form a composite resin flow which is then extruded through an outlet 23. The composite resin flow is taken up and molded by means of a group of cooling rolls into a sheet which is then cut with a sheet cutter 15 into a predetermined length.

In a composite resin flow passage 21 provided between the composite resin flow forming section 22 and the outlet 23 for the composite resin flow, relative positional relationship between the flow passages 41, 42 and the flow passage 31 permits the resin strips B to undergo reaction with the resin a within the XY plane, causing the resin strips B to be deformed into a desired sectional form.

Embodiments of the present invention will be described in more detail with reference to the accompanying drawings.

Figs. 1 to 4 are diagrams schematically showing one embodiment of the apparatus according to the first aspect of the present invention, wherein Figs. 1 and 2 are respectively a schematic plan view and a side view of the whole apparatus and Figs. 3 and 4 are respectively a sectional plan view and a longitudinal sectional view schematically showing the internal structure of the apparatus.

Fig. 5 is a perspective diagram as viewed from line II-II of Fig. 4.

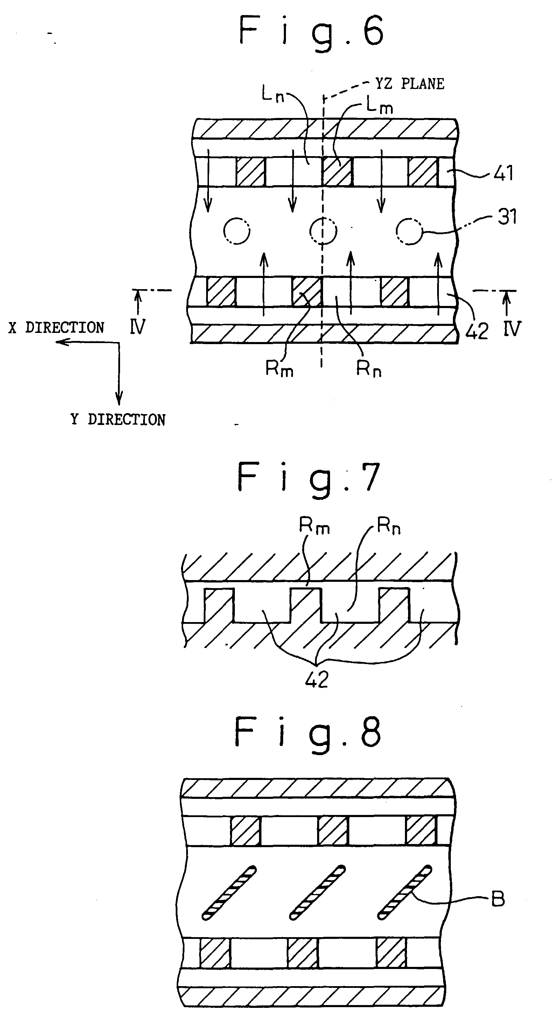

Figs. 6 and 7 are diagrams showing resin flow passages in an apparatus for producing a resin sheet according to a representative embodiment of the present invention. Fig. 6 is a cross-sectional view taken on line III-III of Fig. 4 including XY section. In this drawing, for easy understanding, XY sections which are slightly deviated respectively upward and downward from the line III-III are combined with the above section to form a typical composite diagram. Fig. 7 is a cross-sectional view taken on line IV-IV of Fig. 6.

In this apparatus, the plurality of flow passages 31 for the resin b are circular in section and are arranged at predetermined intervals in the X direction.

Sections Ln and Lm in the flow passage 41 and sections Rn and Rm in the flow passage 42 are deviated in positional relationship in the X direction. Specifically, regarding the positional relationship between the section Rn and the section Ln, one section Rn is provided on one side of the YZ plane including the center of each flow passage 31, while one section Ln is provided on the other side of the YZ plane. The position of the side wall of the sections Lm and Rm may not be necessarily as shown in the drawing, that is, may not be necessarily on the YZ plane including the passage 31 and may be slightly deviated toward the left or right side in the X direction from the YZ plane.

The sections Ln and Rn have an equal length in the X direction, and the sections Lm and Rm have an equal length in the X direction. The height of the section Ln, ΔLn, is equal to the height of the section Rn, ΔRn, in the Z direction, and the height of the section Lm, ΔLm, is equal to the height of the section Rm, ΔRm, in the Z direction. The flow rate and velocity of the resin a are determined by the width and height of the flow passages.

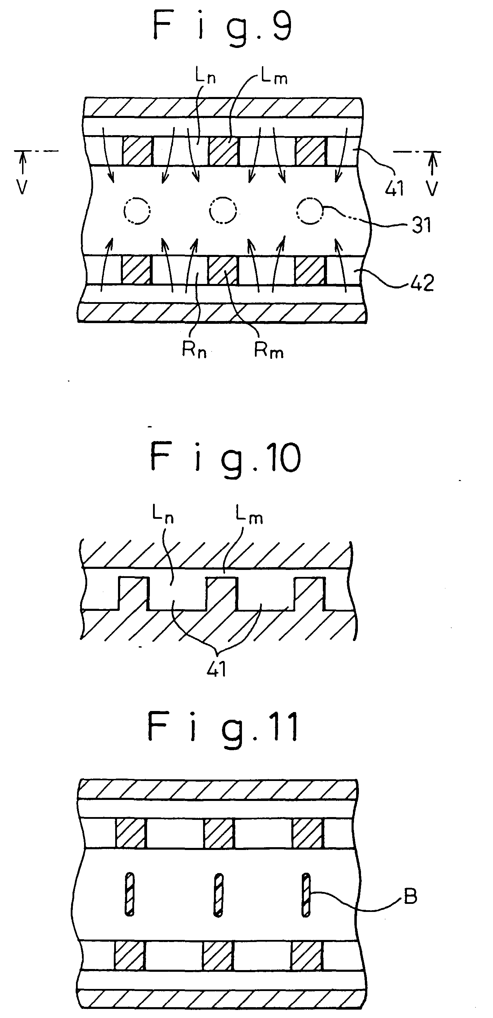

Fig. 8 shows the sectional form of the resin strips B in a position downstream of the composition resin flow passage 21 in Fig. 6. The resin b, which has been discharged in a circular sectional form through the passages 31, is deformed into a flat form due to the action of the flow of the resin a indicated by arrows in Fig. 6. In this apparatus, the resin strips B are provided at a predetermined angle to the surface of the composite sheet. In Fig. 8, for easy understanding of the positional relationship of the resin strips B, the position of flow passages 41, 42 provided upstream of the position shown in this drawing are shown for convenience to form a composite diagram.

Figs. 9 and 10 are schematic diagrams showing another example of the apparatus according to the first embodiment of the present invention. Fig. 9 is a typical composite cross-sectional view, taken on line III-III of Fig. 4, depicted in the same manner as described above in connection with Fig. 6, and Fig. 10 is a cross-sectional view taken on line V-V of Fig. 9.

The apparatus shown in Fig. 6 is different from the apparatus shown in Fig. 9 in that, in the apparatus shown in Fig. 9, the sections Ln and Lm in the flow passage 41 are not deviated from the sections Rn and Rm in the flow passage 42 in relative positional relationship in the X direction. Specifically, regarding the positional relationship between the section Rm and the section Lm, the center of each flow passage 31, the center of each section Rm, and the center of each section Lm are provided on an identical YZ plane.

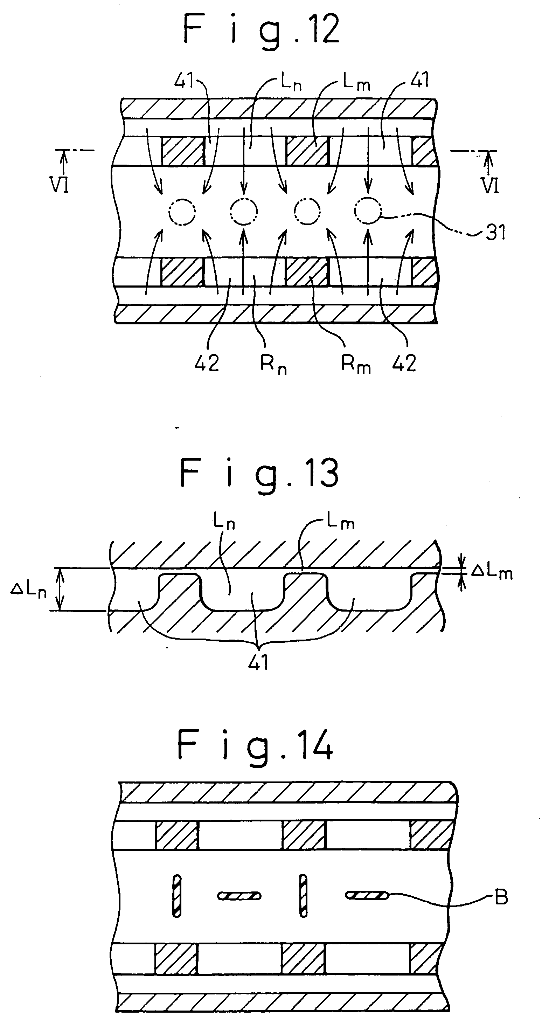

Fig. 11 shows the sectional form of the resin strips B, in a position downstream of the composite resin flow in Fig. 9, depicted in the same manner as described above in connection with Fig. 8. The resin b, which has been discharged in a circular sectional form through the flow passages 31, is deformed into a flat form by the action of flow of the rein a indicated by arrows in Fig. 9. This apparatus permits the resin strips B to be provided at right angles to the surface of the composite sheet.

Figs. 12 and 13 are schematic diagrams showing another example of the apparatus according to the first embodiment of the present invention. Specifically, Fig. 12 is a schematic composite cross-sectional view, taken on line III-III of Fig. 4, depicted in the same manner as described above in connection with Fig. 6, and Fig. 13 is a cross-sectional view taken on line VI-VI of Fig. 12.

The apparatus shown in Fig. 12 is different from the apparatus shown in Fig. 9 in that, in the apparatus shown in Fig. 12, the flow passage 31 is provided also in positions corresponding to the section Ln in the flow passage 41 and the section Rn in the flow passage 42. Specifically, the center of every other flow passage of the plurality of flow passages 31, the center of each section Rm, and the center of each section Lm are provided on an identical YZ plane, while the center of the other every other flow passage of the plurality of flow passages 31, the center of each section Rn, and the center of each section Ln are provided on another identical YZ plane.

Fig. 14 is a diagram, showing the sectional form of the resin strips B in a position downstream of the composite resin flow in Fig. 12, depicted in the same manner as described above in connection with Fig. 8. The resin b, which has been discharged in a circular sectional form through the passages 31, is deformed into a flat form by the action of flow of the resin a indicated by arrows in Fig. 12. This apparatus permits every other resin strip of the resin strips B to be provided at a right angle or parallel to the surface of the composite sheet.

In these embodiments, the thickness t and the width w of the resin strips B may be regulated by suitably regulating the difference in viscosity between the resin b and the resin a. The lower the viscosity of the resin b relative to the viscosity of the resin a, the smaller the thickness t of the resin strips B and the larger the width w of the resin strips B. On the other hand, the higher the viscosity of the resin b, the larger the thickness t of the resin strips B and the smaller the width w of the resin strips B.

The inclination angle of the resin strips B to the thicknesswise direction of the resin layer A may be suitably set by varying the magnitude of the deviation of the position of the flow passages 31 from the position of the flow passages 41, 42 in the X direction.

The flow passages 31 are preferably circular in section from the viewpoint of easily preparing a die. If necessary, however, elliptical, rectangular and other irregular sectional forms may be adopted in the flow passages 31. Further, flow passages 31 having various sectional forms may be provided in combination.

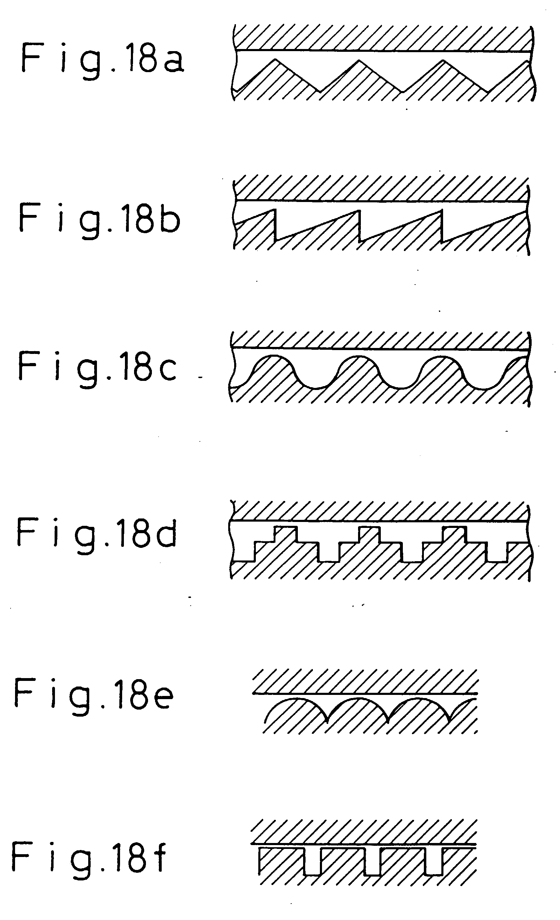

Various forms as shown in Figs. 18a to 18f may be adopted in the flow passages 41, 42 corresponding to Fig. 7.

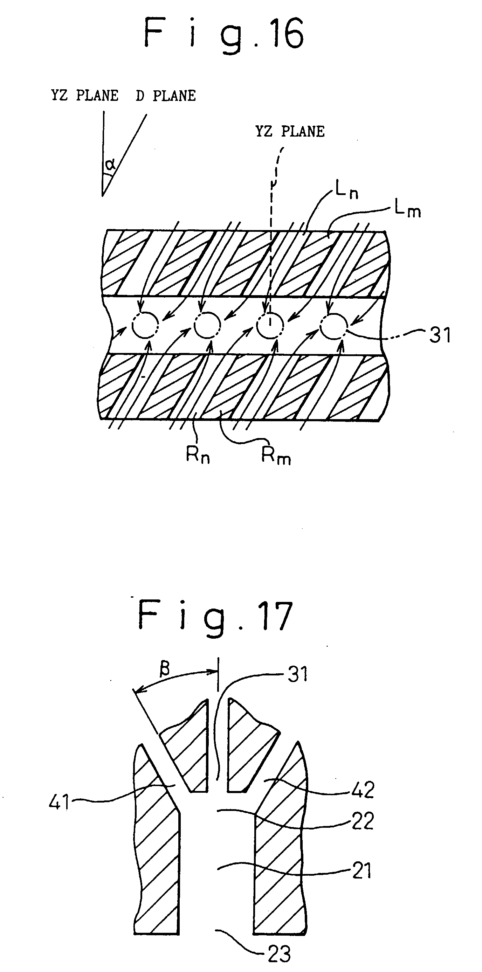

Further, as shown in Fig. 16, the flow passages 41, 42 leading to the composite resin flow forming section 22 may be inclined at a predetermined angle α to the YZ plane. Alternatively, as shown in Fig. 17, they may be inclined at a predetermined angle β to the XZ plane. The inclination angle β is preferably 30 to 120°.

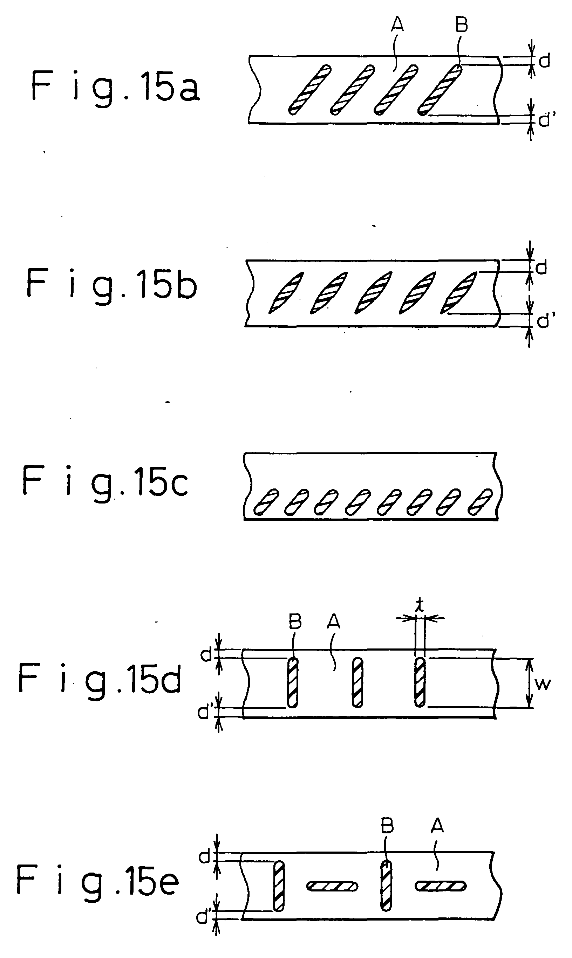

Figs. 15a to 15e are partial sectional views in a direction normal to the extrusion direction, that is, in the widthwise direction of several examples of the composite resin sheet producible according the present invention.

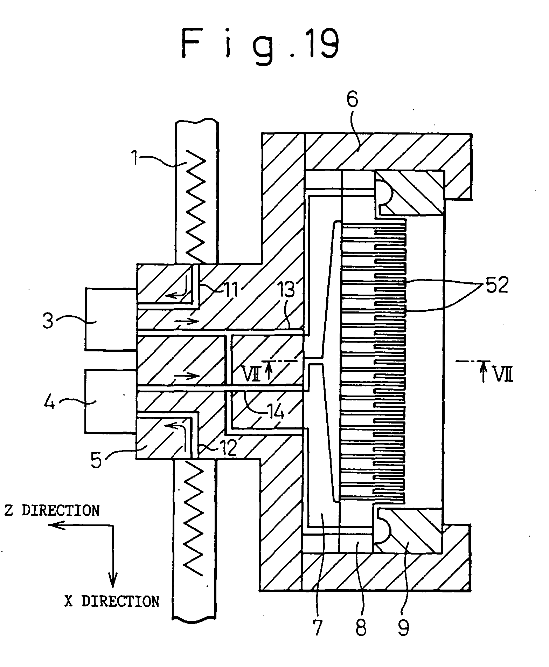

Figs. 19 to 25 are schematic diagrams showing one example of the apparatus according to the second embodiment of the present invention.

In the composite resin flow forming section 72 in this apparatus, the resin a for the substrate resin sheet A and the resin b for the resin strips B advance in an identical direction. This apparatus permits the resin b, for the resin strips B, delivered through the outlet 52 of the plurality of flow passages 51 into the resin flow passages 71 to be buried in the resin a while maintaining the sectional form of the flow passages 51. Specifically, according to this apparatus, the influence of the difference in viscosity between both the resins and the like can be eliminated, and, even when a resin b having a lower viscosity is used, the contemplated sectional form of the resin strips B can be maintained.

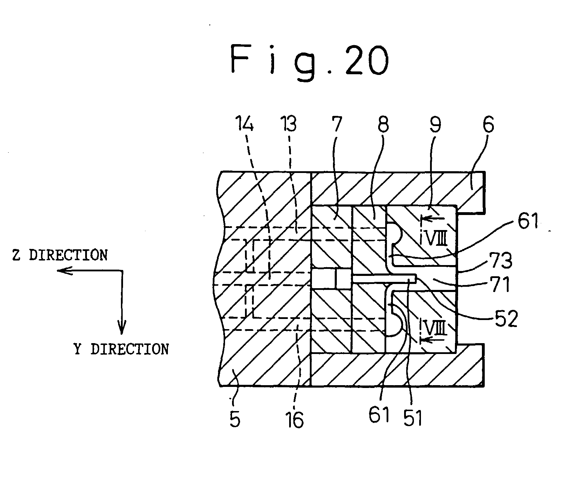

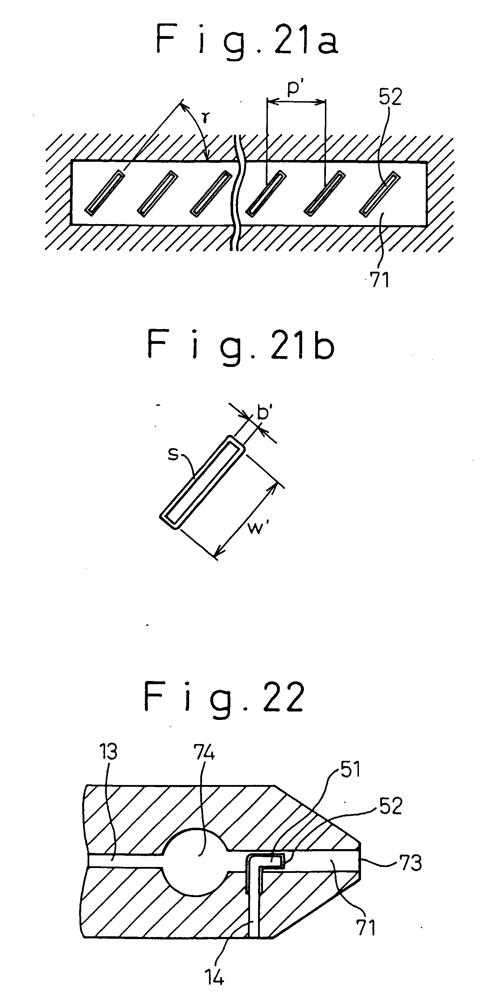

Fig. 19 is a cross-sectional view of the principal part of an extruder, and Fig. 20 a cross-sectional view taken on line VII-VII of Fig. 19. The output 52 of the flow passage 51 for the resin b is provided downstream of the outlet of the flow passage 61 for the resin a and extends into the resin flow passage 71. Fig. 21a is a cross-sectional view taken on line VIII-VIII of Fig. 20, and Fig. 21b is an enlarged view of the outlet 52 of the passage 51 shown in Fig. 21a.

Fig. 22 is a variant of the apparatus shown in Fig. 20. In this variant, the form of a flow passage 74, having an enlarged width, for the resin a is in a manifold form, and, in addition, a delivery pipe for the resin b is provided within the flow passage for the resin a so that both the resins flow in the same direction in a portion where these resins meet.

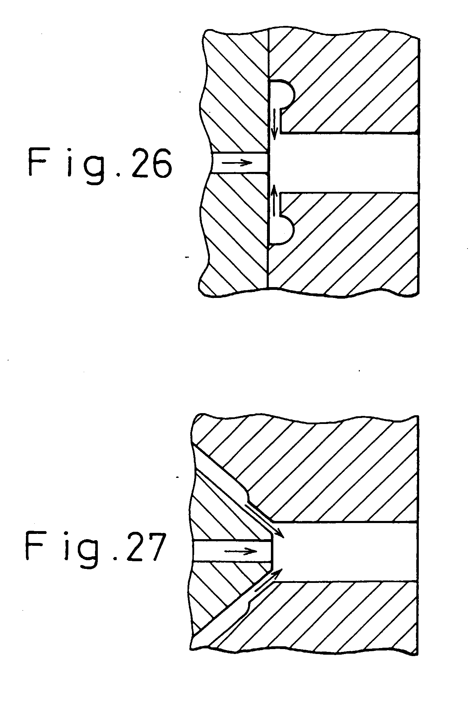

Figs. 26 and 27 show apparatuses (comparative examples) to be compared with the apparatuses according to the present invention. In these comparative examples, unlike the apparatus of the present invention shown in Fig. 20, the outlet for the resin b is provided in the same position as the wall surface. In this comparative apparatus, the resin b is influenced by the flow of the resin a and, hence, is deformed in its section, making it difficult to maintain the contemplated sectional form of the resin strips B.

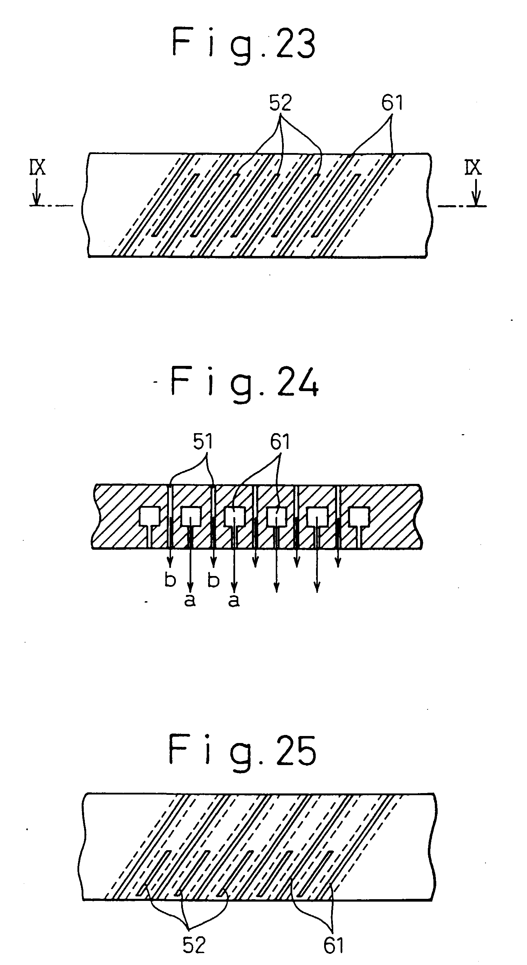

Fig. 23 is a diagram showing an apparatus having such a structure that an outlet 61 for the resin a is provided on both sides of a delivery opening 52 for the resin b for each resin strip B. This drawing is as viewed from the downstream direction of the composite flow passage. Fig. 24 is a cross-sectional view taken on line IX-IX of Fig. 23. This apparatus also can eliminate the influence of the difference in viscosity between both the resins and, even when a resin b having a lower viscosity is used, the contemplated sectional form of the resin strips B can be maintained.

Fig. 25 shows an apparatus having the same structure as the apparatus shown in Fig. 23, except that the delivery openings 52 for the resin b are unevenly provided on one side of the sheet rather than on both sides of the sheet.

Transparent thermoplastic resins are useful as the resin a according to the present invention, and examples thereof include a wide variety of resins including polycarbonate, polystyrene, polyvinyl chloride, polyester resins such as polyethylene terephthalate, acrylic resins such as polymethyl methacrylate, polyamide, polypropylene, polyethylene, amorphous polyolefins such as poly-4-methyl pentene-1 and, in addition, copolymer resins thereof or blend resins thereof. When transparency and weather resistance are required, acrylic resin is preferred with polymethyl methacrylate being particularly preferred.

Resins usable as resin b include those described above in connection with the resin a, and impact-resistant resins are also preferred. When visibility controllability is imparted to the composite sheet, it is possible to incorporate an organic or inorganic dye or pigment, such as carbon black, into the resin b. Further, to prevent broken pieces from scattering or dropping, when the substrate sheet resin is broken, a combination of resin components using an olefin resin as the base resin is preferably adopted. Furthermore, in order to improve the appearance of such a composite resin sheet as a design sheet, it is also possible to incorporate an organic or inorganic dye or pigment into the resin b.

Production examples of the composite resin sheet according to the present invention will be described.

### Production Example 1

Polymethyl methacrylate (Acrypet VH, manufactured by Mitsubishi Rayon Co., Ltd.) was provided as a resin a, and polymethyl methacrylate (Acrypet VH, manufactured by Mitsubishi Rayon Co., Ltd.), which had been kneaded with carbon black, was provided as a resin b.

Further, an apparatus shown in Fig. 1, having a composite resin flow forming section shown in Figs. 6 and 7 was used in this example. The plurality of flow passages 31 had delivery openings each having a diameter of 1 mm and a distance between each two adjacent delivery openings of 3 mm. Further, ΔRm and ΔLm each were 0.2 mm, ΔRn and ΔLn each 1 mm, sections Rm and Lm each had a width of 1.5 mm, and sections Rn and Ln each had a width of 1.5 mm.

The resin a was melted in a first extruder 1 and then fed into a nozzle 9. On the other hand, the resin b was melted and kneaded in a second extruder 2, then passed through a distribution nozzle 7 and a distribution nozzle 8 for molding a second resin layer, and extruded through the flow passage 31. The resins a and b were simultaneously extruded at a molding temperature of 240°C to continuously prepare a composite resin sheet having a size of 3 mm in thickness and 50 cm in width.

The composite sheet thus obtained had a sharp black stripe pattern in the transparent substrate sheet. Resin strips B had a thickness of 0.1 to 0.2 mm and a width of 3 mm, and the angle thereof to the surface of the composite sheet was 45°. The resin strips B were provided while leaving a distance of 3 mm between each two adjacent resin strips. The distance d between one end of the resin strips B and one surface of the sheet and the distance d' between the other end of the resin strips B and the other surface of the sheet were each 0.44 mm (Fig. 15b).

The composite resin sheet was then subjected to a weather resistance test using a sunshine weather-o-meter, wherein it was exposed to rain shower of 83°C for 500 hr. As a result, the resin layer A remained colorless and transparent.

### Production Example 2

A composite resin sheet having a size of 6 mm in thickness and 50 cm in width was continuously produced in the same manner as in Example 1, except that Sumiplast blue GP (a coloring dye, manufactured by Sumitomo Chemical Co., Ltd.) was used instead of the carbon black. Further, an apparatus, shown in Fig. 9 was used instead of an apparatus shown in Fig. 6. The plurality of flow passages 31 had delivery openings each having a diameter of 1.2 mm and a distance between each two adjacent delivery openings of 20 mm. Further, ΔRm and ΔLm each were 0.5 mm, ΔRn and ΔLn each 1 mm, sections Rm and Lm each had a width of 8 mm, and sections Rn and Ln each had a width of 12 mm.

The composite sheet thus obtained had a sharp blue stripe pattern in the transparent substrate sheet. Resin strips B had a thickness of 0.2 mm and a width of 5 mm, and the angle thereof to the surface of the composite sheet was 90°. The resin strips B were provided while leaving a distance of 20 mm between each two adjacent resin strips. The distance d between one end of the resin strips B and one surface of the sheet and the distance d' between the other end of the resin strips B and the other surface of the sheet were each 0.5 mm (Fig. 15d).

The composite resin sheet was then subjected to a weather resistance test using a sunshine weather-o-meter, wherein it was exposed to rain shower of 83°C for 500 hr. As a result, the resin layer A remained colorless and transparent.

### Production Example 3

Polymethyl methacrylate (Acrypet VH, manufactured by Mitsubishi Rayon Co., Ltd.) was provided as a resin a, and polyethylene (Hizex 2200 J, manufactured by Mitsui Petrochemical Industries, Ltd.) was provided as a resin b.

Further, an apparatus, shown in Fig. 1, having a composite resin flow forming section shown in Figs. 9 and 10 was used in this example. The plurality of flow passages 31 had delivery openings each having a diameter of 1.5 mm and a distance between each two adjacent delivery openings of 30 mm. Further, ΔRm and ΔLm each were 0.5 mm, ΔRn and ΔLn each 2 mm, sections Rm and Lm each had a width of 12 mm, and sections Rn and Ln each had a width of 16 mm.

A composite resin sheet having a size of 5 mm in thickness and 50 cm in width was continuously prepared in the same manner as in Example 2 except for the above conditions.

The composite sheet thus obtained had a sharp blue stripe pattern in the transparent substrate sheet. Resin strips B had a thickness of 0.5 mm and a width of 3 mm, and the angle thereof to the surface of the composite sheet was 90°. The resin strips B were provided while leaving a distance of 30 mm between each two adjacent resin strips. The distance d between one end of the resin strips B and one surface of the sheet and the distance d' between the other end of the resin strips B and the other surface of the sheet were each 1 mm (Fig. 15d).

The composite resin sheet was cut into a sample having a size of 15 cm in length and 15 cm in width. This sample was allowed held horizontally, and a steel ball having a weight of 1 kg was dropped from a height of 1 m on the center portion of the sample to determine whether or not debris, formed by the creation of cracks, scattered. As a result, although cracks were created, scattering of debris and the like was not observed.

The composite resin sheet was then subjected to a weather resistance test using a sunshine weather-o-meter, wherein it was exposed to rain shower of 83°C for 500 hr. As a result, the resin layer A remained colorless and transparent.

### Production Example 4

The same resin a and resin b (containing carbon black) as used in Example 1 were provided, and the procedure of Example 1 was repeated, except that an apparatus shown in Figs. 19, 20, 21a, and 21b was used.

The dimension of the outlet 52 for the resin b in this apparatus was such that, in Fig. 21b, b' was 0.1 mm, W' was 2.5 mm, and the thickness s was 0.5 mm and, in Fig. 21a, the inclination angle γ was 45° and the pitch p' was 2 mm.

The resins a and b were simultaneously extruded under conditions of molding temperature 260°C to prepare a composite resin sheet having a size of 3 mm in thickness and 50 cm in width.

The composite sheet thus obtained had a sharp black stripe pattern in the transparent substrate sheet and was even on the whole, and no warp was observed. Resin strips B had a thickness of 0.1 mm and a width of 2.5 mm, and the angle thereof to the surface of the composite sheet was 45°. The resin strips B were provided while leaving a distance of 2 mm between each two adjacent resin strips. The distance d between one end of the resin strips B and one surface of the sheet and the distance d' between the other end of the resin strips B and the other surface of the sheet were each 0.62 mm (Fig. 15a).

### Production Example 5

The same resin a and resin b (containing carbon black) as used in Example 1 were provided, and the procedure of Example 1 was repeated, except that an apparatus, shown in Fig. 1, having a composite resin flow forming section shown in Figs. 12 and 13 was used.

The plurality of flow passages 31 had delivery openings each having a diameter of 0.7 mm and a distance between each two adjacent delivery openings of 3 mm. Further, ΔRm and ΔLm each were 0.2 mm, ΔRn and ΔLn each 1 mm, sections Rm and Lm each had a width of 2 mm, and sections Rn and Ln each had a width of 4 mm.

A composite resin sheet having a size of 3 mm in thickness and 50 cm in width was continuously prepared in the same manner as in Example 1 except for the above conditions.

The composite sheet thus obtained had a sharp black stripe pattern in the transparent substrate sheet. Resin strips B had a thickness of 0.1 to 0.2 mm and a width of 2 mm and were arranged as shown in Fig. 15e. The resin strips B were provided at intervals of 3 mm, the distance d between one end of the resin strips B and one surface of the sheet and the distance d' between the other end of the resin strips B and the other surface of the sheet were each 0.5 mm (Fig. 15e).

The composite resin sheet was then subjected to a weather resistance test using a sunshine weather-o-meter, wherein it was exposed to rain shower of 83°C for 500 hr. As a result, the resin layer A remained colorless and transparent.

### Industrial Applicability

According to the present invention, a composite resin sheet having high transparency and durability, various functions such as design feature, light cut-off property and visibility controllability, and good appearance, can be produced very efficiently by extrusion of a thermoplastic resin, rendering the present invention very useful from the viewpoint of industry.

## Claims

1. An apparatus for producing a composite sheet, comprising:
a resin flow passage (71) having a predetermined width in the X direction, a predetermined thickness in the Y direction, and a predetermined length in the Z direction and including an outlet (61), for a resin a for a substrate resin sheet A, provided on one end of the Z direction and an outlet (73), for a composite resin flow, provided on the other end of the Z direction;
a plurality of flat flow passages (51) for forming a plurality of flat resin strips B formed of a resin b, the plurality of flat flow passages (51) being provided, in a middle portion of the resin flow passage (71) between the outlet (61) for the resin a and the outlet (73) for the composite resin flow, at predetermined intervals in the X direction and at a given angle to the YZ plane,
the flow passages (51), for the resin b, having an outlet (52) provided in a direction toward the outlet (73) for the composite resin flow.

2. The apparatus according to claim 1, wherein the outlet (61) for the resin a is provided in the Y direction on both sides of the outlet (52) of each flow passage (51) for the resin b.

3. The apparatus according to claim 1 or 2 wherein the said given angle is 45°.

4. The apparatus according to claim 3 in which the dimensions of the outlets for resin b are 0.1mm by 2.5mm and the pitch (distance between centre-points of adjacent outlets) is 2mm.

5. The apparatus according to any of claims 1 to 4 in which the outlets (52) for the flow passages (51) are displaced in the Y direction from the centreline of the flow passage (71).

6. A process for producing a composite sheet, comprising the steps of: providing the apparatus according to any preceding claim; passing a resin a for a substrate resin sheet A and a resin b for resin strips B respectively through an outlet (61) for the resin a and an outlet (52) of the flow passage (51) for the resin b into a resin flow passage (71); and then taking up a composite sheet delivered through an outlet (73) for a composite resin flow.

7. A process according to claim 6 in which resin a is transparent.

8. A process according to claim 6 or claim 7 in which resin b contains a dye.

9. A process according to any of claims 6 to 8 in which resin a and b have different viscosities, preferably in which b has a lower viscosity than a.
